# EUROPEAN PATENT APPLICATION

(11) **EP 2 692 696 A1**
(43) Date of publication of application: **05.02.2014**
(21) Application number: 13178322.7
(22) Date of filing: 29.07.2013
(51) Int. Cl.: C02F 1/44, C02F 1/42, C02F 1/28, B01D 35/18, B01D 29/33

(54) **Refrigerated polyfunctional filter for processing water**

(30) Priority: 02.08.2012 IT MI20120294 U
(71) Applicant: Cillichemie Italiana S.R.L., 20129 Milan (IT)
(72) Inventor: Santandrea, Marco, 20129 Milan (IT)
(74) Representative: Cicogna, Franco

(57) **Abstract**

A water processing refrigerated polyfunctional filter comprises a container body containing water processing and filtering materials, even in a mixed condition, and including a non processed water inlet and a processed water outlet, a water microfiltering system comprising a filtering pocket including either one or more filtering membrane layers, and a processed water refrigerating system.

## Description

### BACKGROUND OF THE INVENTION

The present invention relates to a refrigerated polyfunctional filter for processing water, in particular human use water.

As is known, filtering systems for drinking water delivery devices, are affected by a bacterial proliferating problem.

In particular, it is well known that, even in drinking water, microorganisms which, under favorable conditions, may grow and reproduce, are conventionally present.

Drinking water purifying systems, before delivery said water, comprise, for example, carbon active materials having a good adsorbing capability, owing to their porous structure, which has a broad inner surface area suitable to adsorb a number of undesired substances, by drawing their molecules on the individual grain inner cavity surface.

The use of said active carbon or charcoal material, is, in particular, related to a removal of excess chlorine, and possible undesired colors and odors.

However, a chlorine removal process allows microorganisms to growth and reproduce on the surfaces of the individual active carbon grains.

A parameter limiting the growth of said microorganisms is, as it is well known, a low temperature which reduces the enzymatic microbic activity, water activity (Aw) thereby cellular membranes will become less fluid.

The average temperature of drinking water delivered through the Italian water delivery system varies from 10°C to 25°C.

A classifying of the microorganisms based on an optimum growth temperature comprises the following groups:
1- Thermophilics: microorganisms with an optimum temperature greater than 45°C and being not interesting.
2- Mesophylics: microorganisms preferring average temperatures from 20 to 45°C and being scarcely interesting.
3- **Psychrotrophilics and Cryophilics:** they are microorganisms tolerating low temperatures from 0 to 20°C, and being greatly interesting (e.g. Pseudomonas).

Since the microorganisms growth is affected by temperature, to use low temperature provides a retarding or locking effect for a bacterial reduction, since a low temperature prevents enzymatic activities and consequently the microorganism reproduction.

At present filtering systems using mixed arrangements for processing human use water are also known.

The above mixed systems, however, are susceptible to several improvements, mainly with respect to their making, selling and operation costs, to enhance their application field.

More specifically, it has been found that a number of systems, conventionally proposed as composite filters, are all designed to include a coupling fixed head for connection to the water system, and a filtering element, of an interexchangeable disposable type, the so-called "disposable" filtering element, having a poor self-operation capability and, accordingly, a comparatively high cost, main also due to its disposal of operation as a waste material.

It should be pointed out that the above "disposable" filtering element, including a small active carbon or resin amount, has a reduced self-operation capability, a low contacting time between water and the active carbon or resin, and accordingly must be frequently replaced with a consequent increase of the operating and maintenance cots.

### SUMMARY OF THE INVENTION

Thus, the aim of the present invention is to provide a refrigerated polyfunctional filter, for processing water, in particular human use water, overcoming the above disclosed drawbacks of the prior art systems.

Within the scope of the above mentioned aim, a main object of the present invention is to provide such a refrigerated polyfunctional filter, for processing water, allowing to properly process water by adsorbing material, such as active carbons, or ionic exchange material, such as exchanging resins or other filtering or neutralizing material, even associated, without any limitation, with a microfiltering system using micrometric size throughgoing pore membranes, to provide water with improved chemical-physical characteristics, enhanced with respect to those before its processing through the filtering system.

A further object of the present invention is to provide such a refrigerated polyfunctional filter for processing water which, owing to its specifically designed features, is very reliable and safe in operation.

According to one aspect of the present invention, the above mentioned aim and objects, as well as yet other objects, which will become more apparent hereinafter, are achieved by a refrigerated polyfunctional filter for processing water, **characterized in that** said filter comprises a container body including water processing and filtering materials, of any desired natures and types, even in a mixtures thereof, and including a non processed water inlet and a processed water outlet, a water microfiltering system comprising a filtering pocket including either one or more filtering membrane layers and a refrigerating system.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:

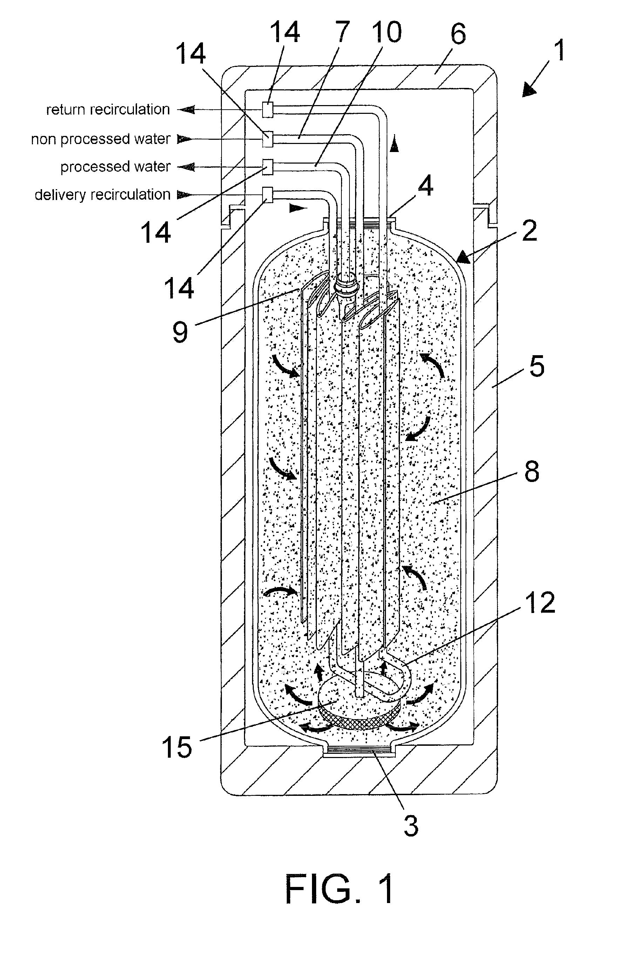

Figure 1 is a longitudinally cross-sectioned elevation view showing the water processing polyfunctional refrigerated filter, according to the present invention;

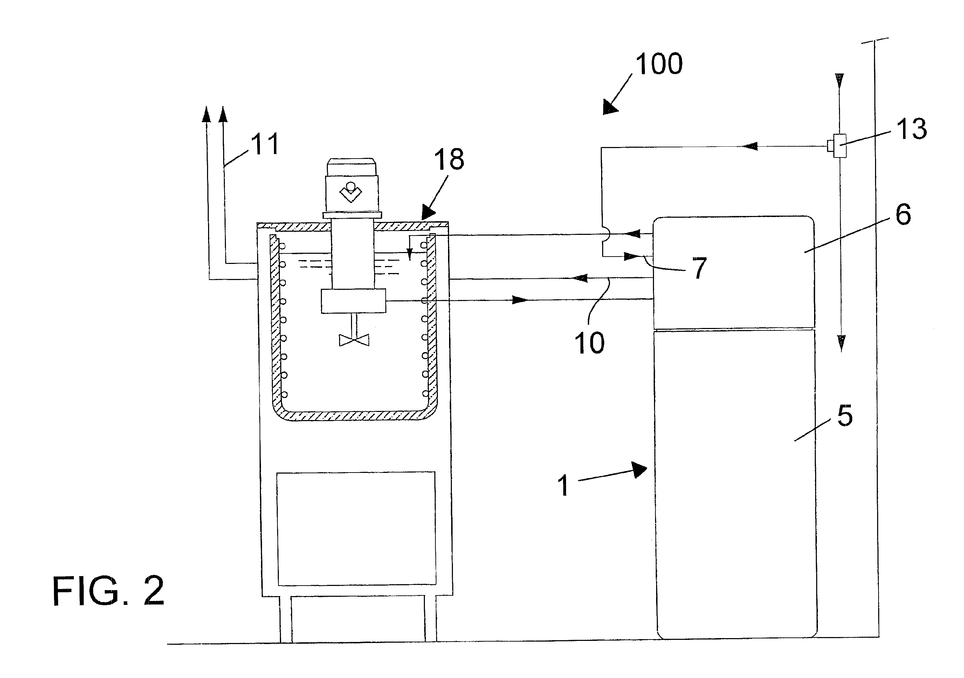

Figure 2 is a functional diagram of a water delivery system including a filter according to the present invention;

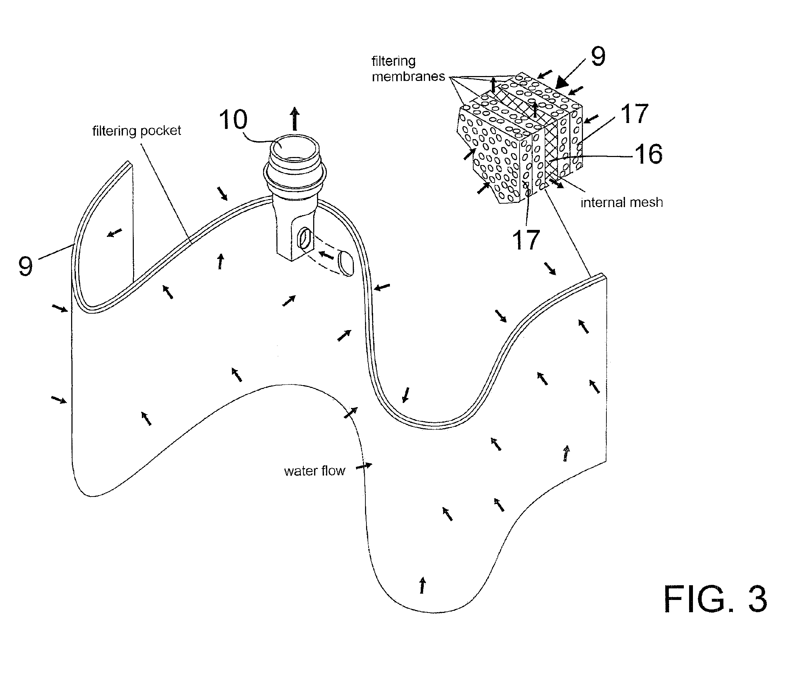

Figure 3 is a schematic view showing, in a detailed manner, a microfiltering system of a "filtering pocket" type, with a detail being represented in an enlarged cross-section of the refrigerated polyfunctional filter shown in Figure 1;
   and

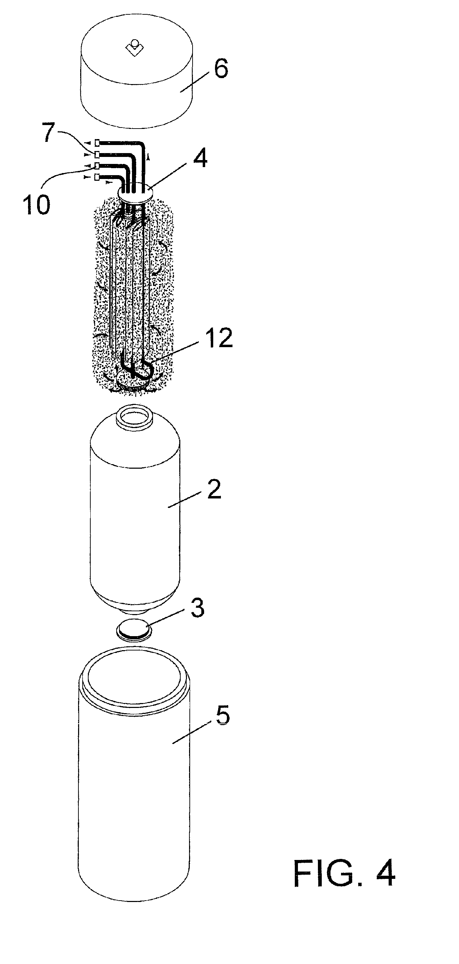

Figure 4 is a perspective exploded view of the water processing refrigerated polyfunctional filter according to the present invention.

### DESCRIPTION OF THE PREFERRED EMBODIMENTS

With reference to the number references of the above mentioned figures, the water processing refrigerated polyfunctional filter according to the present invention, which has been generally indicated by the reference number 1, comprises a container body 2, having preferably a cylindric configuration, for containing water processing and microfiltering masses therein.

Said container body 2 is preferably opened at its two top and bottom end portions.

The bottom end portion is preferably closed by a bottom plug 3, whereas the top end portion comprises a top closing plug 4.

The container body 2 is preferably encompassed by a box-like thermally insulating construction 5, having an access cover 6.

A central manifold tube 7, for feeding therethrough raw water to be processed, enters the container body 2 through the top closing plug 4 and comprises, in said container 2, a anti-backflow system and a disc element made of a material suitable to retain therein a small size processing and compensating material 8, for operating in a volume expanding condition.

If large size processing materials are used, then the disc element could also be omitted.

The materials used as the water processing mass may comprise active carbon or charcoals, with an optional addition of copper and silver salts, such as bacteriostatic, exchanger resins, polyphosphates, stones or hard crystal materials.

Said container 2 further contains a filtering pocket 9, for microfiltering water, said filtering pocket 9 being coupled to the processed water outlet duct 10 and accordingly to the water delivery and use water system, generally indicated by the reference number 11.

The filter according to the present invention comprises moreover a refrigerating liquid circulating coil assembly 12.

Thus, water coming from the water system 13 is fed into the filter through the central manifold 7, preferably through a quick coupling type of fitting 14.

The raw non processed water arrives at the bottom of the container through the manifold tube 7, which comprises a check or non return-valve, for preventing losses of filtering masses arranged in said element, and an evenly water diffusing system, that is without any preferential directional ways.

To that end is herein preferably used a diffuser disc element 15, made of a foamed soft material of an open cell type, allowing water passing thereinto to be adjusted, but with throughgoing cavities having such a diameter as to prevent any processing material loss, even if the processing material has a small size.

The above soft material may also operate to compensate, in a suitable manner, any volume expansions of the wet active carbon, if such a material is used.

Thus, with a homogeneously water feeding into the container, the fed water after having passed through the filtering mass 8 such as an active carbon, resin and so on, is collected and micro filtered by a physical-mechanical collecting and microfiltering system, preferably comprising the above filtering pocket 9.

More specifically, the microfiltering system, which may be added to the system even as an optional arrangement, and essentially consisting of the filtering pocket 9, has a broad or large outer surface, to improve its operating efficiency and duration.

Preferably, said pocket 9 comprises either one or more filtering material layers having a set fineness and micrometric pore size.

Said filtering pocket 9 is preferably made, for example, of a calandered polypropylene material, even if very good results have been also achieved by using cellulose, polycarbonates, polyesters and so on.

Said "filtering pocket" 9 is closed by welding all along its edge.

Thus, the water will be urged, by the hydraulic pressure, to pass through the filtering wall.

In said filtering pocket 9, is moreover arranged a large-mesh net 16, providing a target separation of the filtering walls, to facilitate the filtered water flow toward the outlet manifold 10.

The filtering pocket is arranged in said container in a multiple folded or pleated-crimped manner, to occupy a minimum volume, while always providing a very broad useful filtering surface, on both faces thereof.

To improve the operating efficiency of said filtering pocket, two filtering material layers 17, such as of cellulose, calandered polypropylene, polycarbonate are preferably used.

A maximum operating efficiency and duration of the microfiltering filter element has been achieved by filtering material layers of different pore size, that is a larger one on the outside and a smaller one on the inside.

From several water trials and tests, it has been found that an optimum hole diameter ratio is of 1:10; or an inner layer hole diameter of about 0.5 - 1 micron and an outer layer hole diameter of 5 - 10 microns.

Thus, it has been found that great advantages by using only a single depth filtering have been achieved.

The system comprises therein further passages, the so-called "funnel" ways, providing a slower clogging, with a consequent increased duration of the filtering element.

The filter refrigerating system comprises a coil arrangement 12, preferably of a metal and finned type, therethrough a refrigerated liquid is circulated, preferably a low pressure water, for keeping the filtering mass and water temperature at about 3° - 5°C.

Through the coil arrangement 12 recirculates water fed from an outer refrigerating system 18, included in the water delivery system 100, where the filter 1 according to the present invention is arranged.

It has been found that the invention fully achieves the intended aim and objects.

In fact, a water processing refrigerating polyfunctional filter has been provided, comprising a container containing water filtering and processing materials (such as active carbons or charcoals, resins, crystals and so on) even in a mutually combined form, built-in thereinside, by a highly efficient physical microfiltering system.

The filter according to the present invention may be advantageously used for human use water, since it is held in a refrigerated condition by a coil tube therethrough a refrigerating fluid is conveyed.

Moreover, the present invention provides a proper water processing by adsorbing material such as active carbons or ionic exchange substances, such as exchanger resins, or other filtering or neutralizing materials, of any desired types, which may also be associated with, in a non limitative manner, a microfiltering system including micrometric throughgoing size pore membranes, providing drinking water having chemical-physical characteristics improved with respect to those before a processing through said filtering system.

To drastically reduce the problems related to a bacterial growth in the filter, and depending on the delivered water, the subject composite filter comprises a built-in inner system holding in the container a low or cold temperature from 3 to 5°C.

The present invention further provides to use, in said container including the water processing or treating material, a coil tube, preferably made of a finned metal material enhancing the exchange surface, and therethrough a pre-refrigerated liquid, generally water is conveyed, or any other refrigerating fluid or gas types.

Said refrigerating or coil tube is preferably arranged in the filtering mass; however, even if with a less efficiency, it is also possible to arrange said refrigerating coil tube with a tangentially arrangement outside of the container.

The preferred cooling system comprises a water cooling machine, operating based on the so-called "ice bank technology", using a refrigerated water mass in a stirred basin, to transfer a low temperature to one or more coil arrangements immersed therein, and therethrough drinking water to be delivered to users is conveyed; alternately, it is also possible to use any other systems allowing to properly lower the refrigerating fluid temperature.

Thus, by the above mentioned "ice bank" technology, therein cold water is used in the primary basin with a temperature from 1 to 4°C and therein a small immersion pump is also used, it is possible to recirculate a portion of this water to a further coil arranged in the filter.

The container containing the water filtering or processing material, the filter proper and water feeding and delivery tubes is suitably thermally insulated to prevent any thermal dispersions from occurring.

It should be also pointed out that the invention further allows to alternately use an autonomous cooling system, provided for only cooling the refrigerating liquid conveyed through the coil arranged in the filter.

Thus, the refrigerated polyfunctional filter according to the present invention allows to properly process and deliver a large water amount, treated in an optimum manner, according to the features and properties of the processing material held therein as a processing and microfiltering substance, thereby holding at a low level the bacterial growth risk therein.

More specifically, it should be apparent that the cylindric configuration of the container or tank allows the latter to be easily made.

Moreover, the provision of a "filtering pocket" having a broad filtering surface size allows, inter alia, since it is inward folded, to properly encompass the overall system volume, while providing a full operating efficiency satisfactory duration.

Its easy loading, moreover, permits said filtering tank to be reused, if desired.

The filter according to the present invention overcome all the prior art problems, both with respect to the quality and amount of the provided processed water, as well as with respect to the operating time and filtering system managing.

Furthermore, the microfiltered water collecting system, for taking water from the filtering pocket, and conveying collected water to a desired outlet, may be easily removed and replaced.

In addition, the top plug comprises suitable gaskets allowing said top plug to be easily and quickly connected through any suitable fittings to and from the filter itself.

The bottom plug, also including suitable gaskets, permits the processing or treating material to be easily and quickly loaded.

More specifically, the filter is loaded by providing, at the filter outlet, a small suction or negative pressure, to evenly distribute the water processing material.

In practicing the invention, the used materials, as well as the contingent size and shapes can be any, according on requirements.

## Claims

1. A water processing refrigerated polyfunctional filter, **characterized in that** said filter comprises a container body containing water processing and filtering materials, even in a mixed condition, and including a non processed water inlet and a processed water outlet, a water microfiltering system comprising a filtering pocket including either one or more filtering membrane layers, and a processed water refrigerating system.

2. A filter, according to claim 1, **characterized in that** said filtering pocket filtering membranes comprise membrane pores, even of different diameters, so arranged as to allow water to pass only through said filtering membranes.

3. A filter, according to claim 2, **characterized in that** said filtering pocket comprises a net or mesh arrangement, arranged between said filtering membranes, for facilitating a processed water flow and providing said filtering pocket with an improved mechanical strength.

4. A filter, according to one or more of the preceding claims, **characterized in that** said filtering pocket comprises a large filtering surface and is so folded as to reduce a size thereof.

5. A filter, according to one or more of the preceding claims, **characterized in that** said filter comprises a microfiltered water drawing system for drawing water from said filtering pocket and conveying said water to the processed water outlet, and being of a removable and replaceable type.

6. A filter, according to one or more of the preceding claims, **characterized in that** said refrigerating system comprises a coil therethrough a refrigerating liquid is conveyed.

7. A filter, according to one or more of the preceding claims, **characterized in that** said filter further comprises a top plug including gaskets for coupling fitting elements to and from said filter.

8. A filter, according to one or more of the preceding claims, **characterized in that** said filter comprises a bottom plug, including bottom plug gaskets for facilitating a loading of the water processing material into the container body.

9. A filter, according to one or more of the preceding claims, **characterized in that** said filter further comprises a loading system including, at an outlet of said filter, suction negative pressure means to evenly distribute the water processing material therethrough.
